# EUROPEAN PATENT SPECIFICATION

(11) **EP 3 843 003 B1**
(45) Date of publication and mention of the grant of the patent: **19.07.2023**
(21) Application number: 19851718.7
(22) Date of filing: 31.07.2019
(51) Int. Cl.: G06V 10/20, G06V 10/44, G06V 10/82, G06N 3/045, G06N 3/08

(54) **TARGET DETECTION METHOD AND APPARATUS, COMPUTER-READABLE STORAGE MEDIUM, AND COMPUTER DEVICE**
VERFAHREN UND VORRICHTUNG ZUR ZIELDETEKTION, COMPUTERLESBARES SPEICHERMEDIUM UND COMPUTERVORRICHTUNG
PROCÉDÉ ET APPAREIL DE DÉTECTION DE CIBLE, SUPPORT DE STOCKAGE LISIBLE PAR ORDINATEUR ET DISPOSITIF INFORMATIQUE

(30) Priority: 24.08.2018 CN 201810974541
(43) Date of publication of application: 30.06.2021
(73) Proprietor: Tencent Technology (Shenzhen) Company Limited, Shenzhen, Guangdong, 518057 (CN)
(72) Inventor: MIAO, Jie, Shenzhen, Guangdong 518057 (CN); RAN, Chen, Shenzhen, Guangdong 518057 (CN); XU, Dianping, Shenzhen, Guangdong 518057 (CN); JIA, Xiaoyi, Shenzhen, Guangdong 518057 (CN); JIANG, Mei, Shenzhen, Guangdong 518057 (CN); LIN, Yugeng, Shenzhen, Guangdong 518057 (CN)
(74) Representative: AWA Sweden AB
(86) International application number: PCT/CN2019/098742
(87) International publication number: WO 2020/038205

(56) References cited:
- CN-A- 106 504 223
- CN-A- 107 423 760
- CN-A- 108 154 196
- CN-A- 108 229 455
- US-A1- 2018 060 719
- CAO XIAOGUANG ET AL: "Detecting of foreign object debris on airfield pavement using convolution neural network", PROCEEDINGS OF SPIE; [PROCEEDINGS OF SPIE ISSN 0277-786X VOLUME 10524], SPIE, US, vol. 10605, 15 November 2017 (2017-11-15), pages 1060536-1060536, XP060098660, DOI: 10.1117/12.2295282 ISBN: 978-1-5106-1533-5
- YUGUANG LIU ET AL: "Multi-Path Region-Based Convolutional Neural Network for Accurate Detection of Unconstrained "Hard Faces"", ARXIV.ORG, CORNELL UNIVERSITY LIBRARY, 201 OLIN LIBRARY CORNELL UNIVERSITY ITHACA, NY 14853, 27 March 2017 (2017-03-27), XP080759925, DOI: 10.1109/CRV.2017.20
- WEI YUNCHAO ET AL: "Revisiting Dilated Convolution: A Simple Approach for Weakly- and Semi-Supervised Semantic Segmentation", 2018 IEEE/CVF CONFERENCE ON COMPUTER VISION AND PATTERN RECOGNITION, IEEE, 18 June 2018 (2018-06-18), pages 7268-7277, XP033473646, DOI: 10.1109/CVPR.2018.00759 [retrieved on 2018-12-14]

## Description

### FIELD OF THE TECHNOLOGY

This application relates to the field of computer technology, and in particular, to a method and an apparatus for target detection, a computer-readable storage medium, and a computer device.

### BACKGROUND OF THE DISCLOSURE

More and more information are transmitted through images with development of the computer technology. Target detection, as an important branch of image processing, aims at determining a position of a target object in an image.

In a conventional method for target detection, the position of the target object in the image is determined by searching the image for a locating point on the target object. For example, the target object is a QR code, and an image is searched for position marks located at three vertices of the QR code, to determine a position of the QR code in the image. The conventional method for target detection is poor in robustness and time-consuming. Documents *"*Detecting of foreign object debris on airfield pavement using convolution neural network" (DOI: 10/1117/12.2295282) to CAO Xiaoguang, et al and *"*Multi-Path Region-Based Convolutional Neural Network for Accurate Detection of Uncontstrained 'HardFaces'" (DOI: 10.1109/CRV.2017.20) to LIU Yuguang et al both utilize a VGG net to extract features corresponding to different receptive fields from an image, and detect foreign object debris and faces of different scales from the image based on such extracted features.

### SUMMARY

Based on the above, it is necessary to provide a method and an apparatus for target detection, a computer-readable storage medium, and a computer device, which address the technical issue of poor robustness and high time consumption in conventional technology.

According to an aspect, a computer-implemented method for target detection is provided. The method is applied to a computer device, and includes:
obtaining a to-be-detected image;
extracting, through a predetermined neural network, a first image feature and a second image feature that correspond to the to-be-detected image, where the predetermined neural network is capable of target detection and obtained by training a neural network based on sample images in which a position of the target object is marked;
performing dilated convolution based on the second image feature, to obtain a third image feature corresponding to the to-be-detected image;
performing classification and regression on multiple bounding boxes corresponding to the first image feature and the third image, to determine candidate position parameters corresponding to a target object in the to-be-detected image and degrees of confidence corresponding to the candidate position parameters, where the bonding poxes are configured to predict positions of the target object in the to-be detected image; and
selecting a valid position parameter from the candidate position parameters according to the degrees of confidence, and determining a position of the target object in the to-be-detected image according to the valid position parameter, where the valid position parameter is one of the candidate position parameters that meets a predetermined selection condition.

Moreover, extracting the first image feature and the second image feature that correspond to the to-be-detected image includes: extracting and outputting the first image feature and the second image feature that correspond to the to-be-detected image through a basic network in the predetermined neural network. Performing the dilated convolution based on the second image feature to obtain the third image feature corresponding to the to-be-detected image includes: performing the dilated convolution based on the second image feature through a dilated convolutional network in the predetermined neural network, to obtain and output the third image feature corresponding to the to-be-detected image. Performing the classification and the regression on the multiple bounding boxes corresponding to the first image feature and the multiple bounding boxes corresponding to the third image to determine the candidate position parameters corresponding to the target object in the to-be-detected image and the degrees of confidence corresponding to the candidate position parameters includes: performing the classification and the regression on the plurality of bounding boxes corresponding to the first image feature and the plurality of bounding boxes corresponding to the third image through an output network in the predetermined neural network, to determine the candidate position parameters corresponding to the target object in the to-be-detected image and the degrees of confidence corresponding to the candidate position parameters. Extracting and outputting the first image feature and the second image feature that correspond to the to-be-detected image through the basic network in the predetermined neural network includes: performing convolution and pooling sequentially on the to-be-detected image through a primary feature extraction network in the basic network, to output a first intermediate feature corresponding to the to-be-detected image; and performing feature extraction based on the first intermediate feature through a residual network in the basic network, to obtain and output the first image feature and second image feature that correspond to the to-be-detected image.

According to another aspect, a computer-readable storage medium is provided. The computer-readable storage medium stores a computer program, and the computer program when executed by a processor implements the foregoing method for target detection.

According to another aspect, a computer device is provided. The computer device including a memory and a processor, the memory stores a computer program, and the processor when executing the computer program implements the foregoing method for target detection.

Hereinabove the method and the apparatus for target detection, the computer-readable storage medium, and the computer device are provided. The first image feature and the second image feature that correspond to the to-be-detected image are extracted. Then, the dilated convolution is performed based on the second image feature, to obtain the third image feature corresponding to the to-be-detected image. Further, the classification and the regression are performed based on the first image feature and the third image feature, and the position of the target object in the to-be-detected image is determined according to a result of the classification and the regression. Thereby, the image features corresponding to the to-be-detected image are automatically extracted, and the classification and the regression are performed based on the extracted image features, which improves robustness and reduces time consumption in detection effectively. In addition, a receptive field can be effectively expanded through dilated convolution, which adapts well to target objects with different sizes in detection.

### BRIEF DESCRIPTION OF THE DRAWINGS

For clearer illustration of the technical solutions according to embodiments of the present disclosure or conventional techniques, hereinafter are briefly described the drawings to be applied in embodiments of the present disclosure or conventional techniques. Apparently, the drawings in the following descriptions are only some embodiments of the present disclosure, and other drawings may be obtained by those skilled in the art based on the provided drawings without creative efforts.
Figure 1 is a diagram of an application environment of a method for target detection according to an embodiment;
Figure 2 is a schematic flowchart of a method for target detection according to an embodiment;
Figure 3 is a structural block diagram of a predetermined neural network according to an embodiment;
Figure 4 is a structural block diagram of a down-sampling module according to an embodiment;
Figure 5 is a structural block diagram of a residual block according to an embodiment;
Figure 6 is a structural block diagram of another residual block according to an embodiment;
Figure 7 is a structural block diagram of a second residual block according to an embodiment;
Figure 8 is a structural block diagram of another predetermined neural network according to an embodiment.
Figure 9 is a schematic flowchart of another method for target detection according to an embodiment;
Figure 10 is a structural block diagram of an apparatus for target detection according to an embodiment;
Figure 11 is a schematic graph of comparison of indicators in detecting an identification code according to an embodiment;
Figure 12 is a structural block diagram of a computer device according to an embodiment; and
Figure 13 is a structural block diagram of another computer device according to an embodiment.

### DESCRIPTION OF EMBODIMENTS

Hereinafter the present disclosure is further illustrated in detail in conjunction of the drawings and the embodiments, to make objectives, technical solutions, and advantages of the present disclosure clearer. Specific embodiments described herein are merely intended to explain the present disclosure, instead of limiting the present disclosure.

Terms "first", "second", and the like used in the present disclosure are intended to distinguish similar objects in name, and the objects are not limited by such terms. It is understood that the terms are interchangeable in a suitable case without departing from the scope of the present disclosure. For example, "first loss parameter" may be described as "second loss parameter", and similarly, "second loss parameter" may be described as "first loss parameter".

Moreover, the terms "include", "comprise", "have", and any variants thereof are intended to cover a non-exclusive inclusion. For example, a process, a method, a system, a product, or a device that includes a series of steps or elements may not only include such steps or elements that are clearly listed, and may further includes other steps or elements that are not expressly listed or that are inherent to the process, the method, the product, or the device.

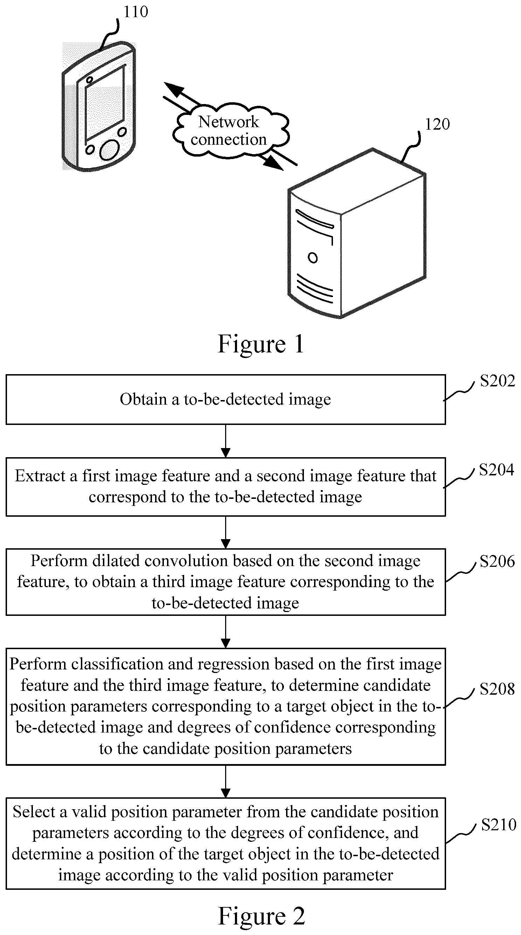

A method for target detection according to embodiments of the present disclosure may be applied to an application environment as shown in Figure 1. The application environment may involve a terminal 110 and a server 120. The terminal 110 and the server 120 may be connected via a network.

Model training may be implemented on the server 120 to obtain a predetermined neural network with a capability of target detection, and the predetermined neural network is deployed on the terminal 110. The terminal 110 performs following operations after obtaining a to-be-detected image. The to-be-detected image is inputted into the predetermined neural network. A first image feature and a second image feature that correspond to the to-be-detected image are extracted through the predetermined neural network. Then, dilated convolution is performed based on the second image feature, to obtain a third image feature corresponding to the to-be-detected image. Classification and regression are performed based on the first image feature and the third image feature, to determine candidate position parameters corresponding to a target object in the to-be-detected image and degrees of confidence corresponding to the candidate position parameters. Afterwards, a valid position parameter is selected from the candidate position parameters according to the degrees of confidence, and a position of the target object in the to-be-detected image is determined according to the valid position parameter.

In another embodiment, the predetermined neural network may be deployed on the server 120 instead of the terminal 110. In such case, the terminal 110 may send the to-be-detected image to the server 120 after obtaining the to-be-detected image. Then, the server 120 implements the foregoing task, from inputting the to-be-detected image into the predetermined neural network to determining the position of the target object in the to-be-detected image. As an alternative, the model training may be implemented on the terminal 110. For example, the terminal 110 may implement independently the model training and the task from inputting the to-be-detected image into the predetermined neural network to determining the position of the target object in the to-be-detected image. In such case, participation of the server 120 is not necessary.

The terminal 110 may be, but is not limited to, a smartphone, a tablet computer, a notebook computer, a desktop computer, a personal digital assistant, a wearable device, or the like. The server 120 may be implemented by an independent physical server or a server cluster that includes multiple physical servers. It is merely exemplary that the terminal 110 is represented by a mobile phone and the server 120 is represented by an independent physical server in Figure 1, and the exemplary representation is not intended to limit the terminal 110 and the server 120.

A method for target detection is provided according to an embodiment, as shown in Figure 2. It is taken as an example that the method is applied to a computer device (for example, the terminal 110 or the server 120 in Figure 1). The method includes following step S202 to step S210.

In step S202, a to-be-detected image is obtained.

The to-be-detected image is an image on which target detection needs to be performed. The target detection is for determining a position of a target object in an image. The target object is image content substantially, and may be preset based on a practical requirement. For example, the target object may be an identification code, a vehicle, a pedestrian, a face, or the like. The identification code may be a QR code, a one-dimensional code (also referred to as a barcode), an applet code, a PDF (portable data file) 417 code, or the like. Neither the target object nor the identification code is limited thereto.

In an embodiment, the to-be-detected image may be an original image that has not been adjusted. That is, the terminal does not adjust the original image after obtaining the original image, and determines the original image as the to-be-detected image directly. In another embodiment, the to-be-detected image may be an image obtained after adjusting an original image. That is, for better target detection, the terminal adjusts the original image after obtaining the original image, and then determines the adjusted image as the to-be-detected image.

The image may be adjusted by adjusting a resolution of the image. That is, a resolution of the original image may be adjusted to be a reference resolution, which is preset according to a practical requirement. In an embodiment, a quantity of the preset reference resolution may be one. In such case, resolutions of all to-be-detected images are the reference resolution.

In another embodiment, the resolution of the to-be-detected image may be set according to a computing capability of the terminal. That is, the resolution of the to-be-detected image may be different when target detection is performed on terminals with different computing capabilities. In one optional embodiment, a quantity of the preset reference resolutions may be more than one. A matching relationship may be established in advance, between all reference resolutions and terminal descriptive information of all terminals. The terminal descriptive information is configured to characterize the computing capability of the terminal. In such case, step S202 may include following steps. An original image is obtained. Terminal descriptive information configured to characterize a computing capability of the terminal is obtained. The original image is adjusted according to a reference resolution that matches the terminal descriptive information, to obtain the to-be-detected image.

In an embodiment, the terminal descriptive information may be classified. Different types of the terminal descriptive information characterize different terminal computing capabilities, and each type of terminal descriptive information matches a corresponding reference resolution. For example, the terminal descriptive information is classified into high-end terminal descriptive information and low-end terminal descriptive information. The computing capability characterized by the high-end terminal descriptive information is higher than that characterized by the low-end terminal descriptive information. The high-end terminal descriptive information matches a first reference resolution, the low-end terminal descriptive information matches a second reference resolution, and the first reference resolution may be higher than the second reference resolution. For example, the first reference resolution is 512×512, and the second reference resolution is 300×300. Distinction among reference resolutions matching different types of the terminal descriptive information may improve accuracy of target detection for high-end terminals and improve real-time performances of target detection for low-end terminals.

In addition, an image may be adjusted in other aspects according to a practical requirement, which is not limited to adjusting the resolution of the image. For example, attributes of the image, such as contrast, exposure, and color, may be adjusted.

In step S204, a first image feature and a second image feature that correspond to the to-be-detected image are extracted.

Both the first image feature and the second image feature correspond to the to-be-detected image, and may reflect an image characteristic of the to-be-detected image. The first image feature would be subject to classification and regression, and the second image feature would be subject to dilated convolution.

A quantity of first image features may be an integer greater than or equal to one. In a case that there are multiple first image features, spatial scales of the multiple first image features may be different. For example, two first image features are extracted. A spatial scale of one first image feature is 19×19, and a spatial scale of the other first image feature is 10×10. Similarly, a quantity of second image features may be an integer greater than or equal to one. In a case that there are multiple second image features, spatial scales of the multiple second image features may be different.

The first image feature and the second image feature corresponding to the to-be-detected image are extracted through the predetermined neural network. In such case, both the first image feature and the second image feature may be feature maps, in a data form of vectors.

A neural network is trained in advance based on sample images, in which positions of the target object have been marked, to obtain the predetermined neural network. The predetermined neural network has a capability of target detection. For example, the target object is an identification code. A large quantity of identification code sample images may be obtained. The identification code, serving as the target object, is included in each identification code sample image, and a position of the identification code in each identification code sample image has been marked. Model training may be performed based the large quantity of identification code sample images, to obtain the predetermined neural network. The predetermined neural network is capable to achieve end-to-end learning. That is, the to-be-detected image may be directly inputted into the predetermined neural network, and the predetermined neural network outputs directly a prediction parameter for predicting the position of the target object in the to-be-detected image. The prediction parameter refers to candidate position parameters corresponding to the target object in the to-be-detected image, and degrees of confidence corresponding to the candidate position parameters.

In step S206, dilated convolution is performed based on the second image feature, to obtain a third image feature corresponding to the to-be-detected image.

Dilated convolution, also known as atrous convolution, is a convolution method in which holes are inserted between convolution kernels. A hyper-parameter is introduced in the dilated convolution, in comparison with common convolution. The hyper-parameter is referred to as a "dilation rate", and defines spacing between different convolution kernels in data processing.

The third image feature is obtained by performing dilated convolution on the second image feature. Similar to the first image feature and the second image feature, the third image feature may reflect an image characteristic of the to-be-detected image and may be a feature map. A spatial scale of the third image feature may be same as that of the second image feature. In addition, a quantity of third image features may be an integer greater than or equal to one. In a case that there are multiple third image features, spatial scales of the multiple third image scales may be different. For example, the spatial scale of the second image feature is 10×10, three third image features are obtained after performing dilated convolution on the second image feature, and three spatial scales of the three third image features are all 10×10.

In one aspect, the dilated convolution keeps spatial scales of image features unchanged, thereby avoiding information loss resulted from reduced pixel information of the image features. In another aspect, the dilated convolution expands a receptive field, thereby achieving more accurate target detection. The receptive field refers to an area of a region obtained by mapping a pixel in a feature map to the original image, where the feature map is outputted by a hidden layer in the neural network. A larger receptive field in the original image indicates that the pixel is mapped to a larger area in the original image, and indicates that the pixel may contain a feature that is more global and higher in semantic levels.

In step S208, classification and regression is performed based on the first image feature and the third image feature, to determine candidate position parameters corresponding to the target object in the to-be-detected image and the degrees of confidence corresponding to the candidate position parameters.

The candidate position parameter is configured to determine a candidate position of the target object in the to-be-detected image. The degree of confidence is configured to characterize a probability of the candidate position corresponding to the candidate position parameter being the position of the target object in the to-be-detected image. Generally, there are multiple candidate position parameters, and each candidate position parameter corresponds to a degree of confidence.

In an embodiment, a manner of multi-box detection concerning SSD (single shot multibox detector) target detection may be applied to the step of performing the classification and regression based on the first image feature and the third image feature to determine the candidate position parameters corresponding to the target object in the to-be-detected image and the degrees of confidence corresponding to the candidate position parameters.

Each of the first image feature and the third image feature corresponds to multiple preset boxes (that is, bounding boxes). The preset boxes are rectangular boxes which predict the position of the target object in the to-be-detected image. After the classification and the regression are performed on all preset boxes, an offset parameter (obtained through regression) corresponding to each preset box and a degree of confidence (obtained through classification) corresponding to each preset box are obtained. For each preset box, the corresponding offset parameter is configured to determine a position of a region obtained by mapping such preset box to the to-be-detected image, and the corresponding degree of confidence is configured to characterize a probability of such region including the target object. The offset parameters corresponding to all preset boxes are the candidate position parameters corresponding to the target object in the to-be-detected image, and the degrees of confidence corresponding to all preset boxes are the degrees of confidence corresponding to the candidate position parameters.

In addition, the position of each preset box in a corresponding image feature may be described by a four-dimensional parameter group. Thereby, the regression is performed based on the four-dimensional parameter group corresponding to each preset box, to obtain the offset parameter corresponding to such preset box. The four-dimensional parameter group may include a horizontal coordinate (x) of a position point, a vertical coordinate (y) of the position point, a width (w), and a height (h). The position point belongs to the preset box, and may be a vertex of the preset box, a center point of the preset box, or the like. The width is a width of the preset box, and the height is a height of the preset box.

For example, a four-dimensional parameter group is configured to describe a position of a preset box DB 1 in the first image feature. The four-dimensional parameter group includes a horizontal coordinate of an upper-left vertex of the preset box DB 1 in the first image feature, a vertical coordinate of the upper-left vertex in the first image feature, a width of the preset box DB 1, and a height of the preset box DB 1.

A position of the region obtained by mapping the preset box to the to-be-detected image may also be described by a four-dimensional parameter group. Similarly, the four-dimensional parameter group for describing the position of such region may include a horizontal coordinate of a position point of the mapped region, a vertical coordinate of the position point, a width of the mapped region, and a height of the mapped region. The position point of the mapped region may be a vertex of the mapped region, a center point of the mapped region, or the like.

In an embodiment, each pixel in the first image feature may correspond to a predetermined quantity of preset boxes, and the predetermined quantity may be set according to a practical requirement. In an embodiment, the predetermined quantity of preset boxes corresponding to a same pixel in the first image feature may have various aspect ratios and scales. For example, a first image feature F11 is a feature map with a spatial scale of 19x19, and the predetermined quantity is 6. In such case, the first image feature F11 includes 361 (19×19) pixels, each pixel corresponds to six preset boxes, and the six preset boxes may have multiple aspect ratios and scales. Thereby, there are 2166 (361x6) preset boxes in the first image feature F11. Similarly, each pixel in the third image feature may correspond to a predetermined quantity of preset boxes, and the predetermined quantity may be set according to a practical requirement. In an embodiment, the predetermined quantity of preset boxes corresponding to a same pixel in the third image feature may have various aspect ratios and scales.

In step S210, a valid position parameter is selected from the candidate position parameters according to the degrees of confidence, and the position of the target object in the to-be-detected image is determined according to the valid position parameter.

The valid position parameter is a candidate position parameter that meets a predetermined selection condition. The predetermined selection condition may be preset according to a practical requirement. For example, the predetermined selection condition may include that the degree of confidence corresponding to a candidate position parameter is greater than a predetermined threshold for the degree of confidence. That is, a candidate position parameter of which a corresponding degree of confidence is greater than the predetermined threshold is determined to be the valid position parameter. In another example, the predetermined selection condition may include that the degree of confidence corresponding to a candidate position parameter is highest. That is, a candidate position parameter of which a corresponding degree of confidence is the highest among all degrees of confidence is determined to be the valid position parameter.

Referring to the foregoing description, the valid position parameter corresponds to a preset box (which is referred to as a valid preset box hereinafter). It may be appreciated that a position of the region obtained by mapping the valid preset box to the to-be-detected image is the position of the target object in the to-be-detected image. After selecting the valid position parameter, a four-dimensional parameter group may be decoded and converted, from the valid position parameter. The four-dimensional parameter group is configured to describe the position of the region obtained by mapping the valid preset box to the to-be-detected image, that is, the position of the target object in the to-be-detected image. The four-dimensional parameter group may include a horizontal coordinate of a position point of the target object, a vertical coordinate of the position point, a width of the target object, and a height of the target object. Similarly, the position point of the target object may be a vertex of the target object, a center point of the target object, or the like.

In the aforementioned method for target detection, the first image feature and the second image feature that correspond to the to-be-detected image are extracted. Then, the dilated convolution is performed based on the second image feature, to obtain the third image feature corresponding to the to-be-detected image. Further, the classification and the regression are performed based on the first image feature and the third image feature, and the position of the target object in the to-be-detected image is determined according to a result of the classification and the regression. Thereby, the image features corresponding to the to-be-detected image are automatically extracted, and the classification and the regression are performed based on the extracted image features, which improves robustness and reduces time consumption in detection effectively. In addition, a receptive field can be effectively expanded through dilated convolution, which adapts well to target objects with different sizes in detection. Further, a recall rate for small-scale target objects is increased.

The first image feature and the second image feature that correspond to the to-be-detected image are extracted and outputted through a basic network in the predetermined neural network. The dilated convolution is performed based on the second image feature through a dilated convolutional network in the predetermined neural network, to obtain and output the third image feature corresponding to the to-be-detected image. The classification and the regression are performed based on the first image feature and the third image feature through an output network in the predetermined neural network, to determine the candidate position parameters corresponding to the target object in the to-be-detected image and the degrees of confidence corresponding to the candidate position parameters.

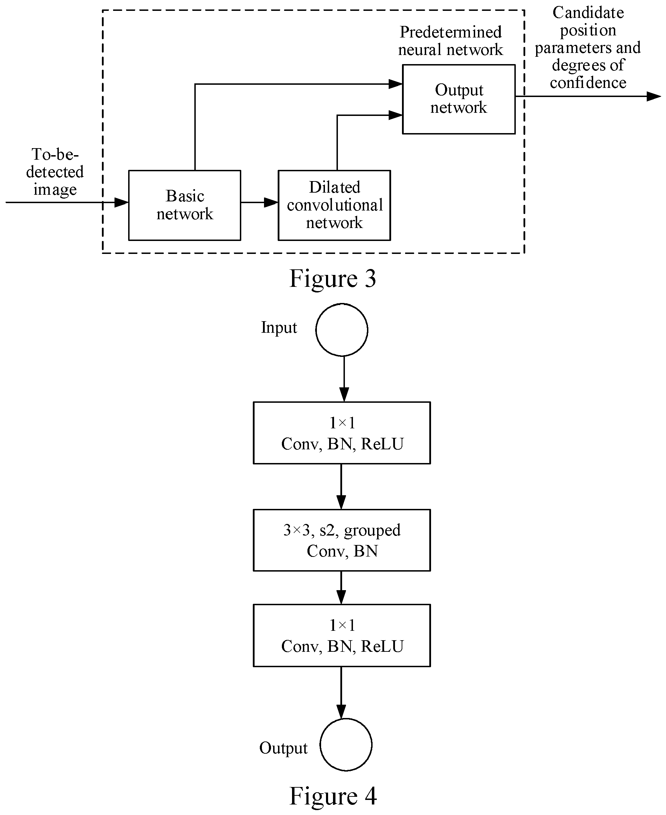

In this embodiment, the predetermined neural network may include the basic network, the dilated convolutional network, and the output network, as shown in Figure 3. The to-be-detected image is inputted into the predetermined neural network from an input end of the basic network. An output end of the basic network is connected to an input end of the output network and an input end of the dilated convolutional network. An output end of the dilated convolutional network is connected to the input end of the output network. An output end of the output network is configured to output the candidate position parameters corresponding to the target object in the to-be-detected image and the degrees of confidence respectively corresponding to the candidate position parameters. The basic network may include multiple output ends. An output end of the basic network that is connected to the output network may be completely identical to, completely different from, or partially identical to, an output end of the basic network that is connected to the dilated convolutional network.

The first image feature is obtained by the basic network from the to-be-detected image, and is outputted to the output network. The second image feature is obtained by the basic network from the to-be-detected image, and is outputted to the dilated convolutional network. The first image feature outputted from the basic network to the output network may be completely identical to, completely different from, or partially identical to, the second image feature outputted from the basic network to the dilated convolutional network. For example, two different first image features and one second image feature are outputted from the basic network, and the second image feature is same as one of the first image features.

The third image feature is obtained by the dilated convolutional network based on the second image feature, and is outputted to the output network. The dilated convolutional network performs dilated convolution for feature extraction. In an embodiment, the dilated convolutional network may be obtained by stacking dilated convolutional layers.

The output network may be configured to perform regression based on the first image feature and the third image feature, to determine the candidate position parameters corresponding to the target object in the to-be-detected image. In addition, the output network may be further configured to perform classification based on the first image feature and the third image feature, to determine the degrees of confidence corresponding to the candidate position parameters, respectively. The output network may be configured to perform the regression and the classification on preset boxes in the first image feature and the third image feature, to obtain the offset parameters and the degrees of confidence, which correspond to the preset boxes. That is, the output network outputs the offset parameter and the degree of confidence that correspond to each preset box. In addition, a network framework of the output network may apply any suitable network framework, as long as a function of classification and regression can be achieved. The network framework is not limited herein.

In an embodiment, the closer a position at which an image feature is outputted is to an entry of the predetermined neural network, the smaller a scale of a preset box in such image feature is. The closer a position at which an image feature is outputted is to an exit of the predetermined neural network, the larger a scale of a preset box in such image feature is. That is, in the predetermined neural network, the image feature outputted at a position close to the entry is configured to detect a small-scale target object, and the image feature outputted at a position close to the exit is configured to detect a large-scale target object. For example, in the predetermined neural network, a first image feature F11 and a first image feature F12 are outputted from the basic network to the output network, and a third image feature F31, a third image feature F32, and a third image feature F33 are outputted from the dilated convolutional network to the output network. A sequence of output positions of the image features are as follows from the entry to the exit: the first image feature F11, the first image feature F12, the third image feature F31, the third image feature F32, and the third image feature F33. Therefore, both a scale of a preset box in the image feature and a scale of a target object detected through the image feature increase gradually from the first image feature F11 to the third image feature F33. For example, a scale of a preset box in the first image feature F12 is smaller than that of a preset box in the third image feature F31, and a scale of a target object detected through the first image feature F12 is less than that detected through the third image feature F31.

The step of extracting and outputting the first image feature and the second image feature that correspond to the to-be-detected image through the basic network in the predetermined neural network includes following steps. Convolution and pooling are sequentially performed on the to-be-detected image through a primary feature extraction network in the basic network, to output a first intermediate feature corresponding to the to-be-detected image. Feature extraction is performed based on the first intermediate feature through a residual network (ResNet) in the basic network, to obtain and output the first image feature and the second image feature that correspond to the to-be-detected image.

In this embodiment, the basic network in the predetermined neural network includes the primary feature extraction network and the residual network. The primary feature extraction network is configured to perform feature extraction on the to-be-detected image. The residual network adds a direct-connection edge to a nonlinear convolutional layer, and may be configured to perform further feature extraction on an output result of the primary feature extraction network. A manner of the feature extraction through the residual network corresponds to an internal structure of the residual network, and different manners of feature extraction may be adopted for different internal structures.

In this embodiment, the primary feature extraction network includes a convolutional layer and a pooling layer. The convolutional layer is configured to perform convolution to obtain image features. The pooling layer is configured to reduce dimensionality of the image features. The pooling layer is usually in two forms, that is, mean pooling and max pooling. In an embodiment, the convolutional layer in the primary feature extraction network may be a 3×3 common convolutional layer, and the pooling layer in the primary feature extraction network may be a 3×3 max pooling layer, where 3×3 denotes a size of a convolution kernel.

The first intermediate feature is obtained after the to-be-detected image is sequentially subject to convolution in the convolutional layer and dimensionality reduction in the pooling layer in the primary feature extraction network.

In this embodiment, the residual network performs feature extraction based on input information thereof. Thereby, the residue network obtains the first image feature corresponding to the to-be-detected image, and outputs the first image feature to the output network of the predetermined neural network. The residual network further extracts the second image feature corresponding to the to-be-detected image, and outputs the second image feature to the dilated convolutional network of the predetermined neural network. The input information of a residual network located closest to the entry of the basic network is an output result of the primary feature extraction network (that is, the first intermediate feature). The input information of a residual network located not closest to the entry of the basic network is an output result of a previous residual network.

In this embodiment, the basic network is constructed by using the residual network. In one aspect, a quantity of parameters and calculation amount can be reduced. In another aspect, fast convergence is facilitated for the network. Thereby, a problem of difficult deep network training is effectively addressed.

In an embodiment, a quantity of the residual network in the basic network is greater than one, and the residual networks are sequentially connected. In such case, the step of performing the feature extraction based on the first intermediate feature through the residual network in the basic network to obtain and output the first image feature and second image feature that correspond to the to-be-detected image may include following steps. The feature extraction is performed on the first intermediate feature sequentially through all residual networks in the basic network. The first image feature corresponding to the to-be-detected image is outputted through a first target residual network. The second image feature corresponding to the to-be-detected image is outputted through a second target residual network.

The first target residual network may be configured to output the first image feature to the output network of the predetermined neural network. The first target residual network is selected from the residual networks included in the basic network. The first target residual network may include one or more residual networks, which are selected in advance from the residual networks of the basic network.

The second target residual network may be configured to output the second image feature to the output network of the predetermined neural network. Similarly, the second target residual network is selected from the residual networks included in the basic network. The second target residual network may include one or more residual networks, which are selected in advance from the residual networks of the basic network.

A quantity of the residual networks included in the first target residual network may be as large as possible, so as to cover the first image features with different spatial scales, thereby improving a performance of target detection. Generally, the second target residual network includes a residual network closest to an exit of the basic network. The residual network included in the first target residual network may be completely identical to, completely different from, or partially identical to, the residual network included in the second target residual network.

For example, the basic network of the predetermined neural network includes the primary feature extraction network, a residual network RN1, a residual network RN2, and a residual network RN3 that are connected in the listed sequence. It may be predetermined that the first target residual network includes the residual network RN2 and the residual network RN3, and the second target residual network includes the residual network RN3. In such case, after the to-be-detected image is inputted into the basic network, the primary feature extraction network performs convolution and pooling on the to-be-detected image, the residual network RN1 performs feature extraction on an output result of the primary feature extraction network, the residual network RN2 performs feature extraction on an output result of the residual network RN1, and the residual network RN3 performs feature extraction on an output result of the residual network RN2. The output result of the residual network RN2 and an output result of the residual network RN3 are outputted, as the first image feature, to the output network of the predetermined neural network. The output result of the residual network RN3 is further outputted, as the second image feature, to the dilated convolutional network of the predetermined neural network.

In an embodiment, the step of performing the feature extraction based on the first intermediate feature through the residual network in the basic network to obtain and output the first image feature and the second image feature that correspond to the to-be-detected image may include following steps. Down-sampling is performed on the first intermediate feature through a down-sampling module in the residual network, to obtain and output a second intermediate feature. The second intermediate feature is mapped to the first image feature and the second image feature that correspond to the to-be-detected image, through a first residual block in the residual network.

In this embodiment, the residual network includes the down-sampling module and the first residual block. The down-sampling module is configured to implement a function similar to that of the pooling layer. That is, the down-sampling module is configured to reduce dimensionality of the image features. Reference is made to Figure 4. In an embodiment, the down-sampling module may include a 1×1 common convolutional layer, a 1×1 batch normalization (BN) layer, a 1×1 rectified linear units (ReLU) layer, a 3×3 common convolutional layer, a 3×3 batch normalization layer, another 1×1 common convolutional layer, another 1×1 batch normalization layer, and another 1×1 ReLU layer, which are sequentially connected.

The second intermediate feature is obtained after the down-sampling module in the residual network performs the down-sampling on the input information of the residual network.

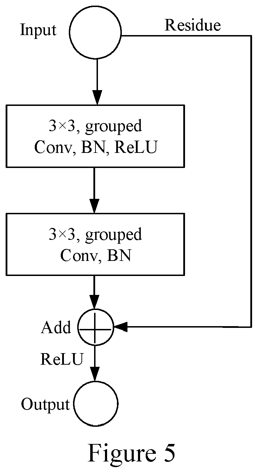

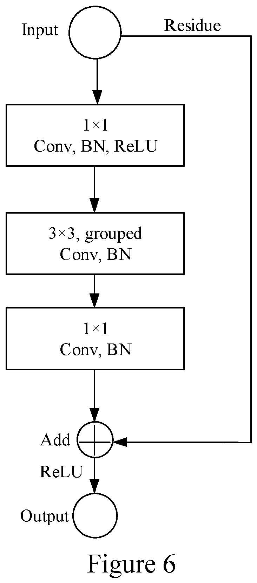

A residual block is a basic block of the residual network. Generally, the residual block includes a residual branch and a short branch. The residual branch is configured to perform nonlinear transformation on the input information of the residual block, and the short branch is configured to performing identical transformation or linear transformation on the input information of the residual block. Correspondingly, the first residual block is a residual block in the basic network. The first residual block may be an existing residual block, for example, a conventional residual block as shown in Figure 5 or a bottleneck residual block as shown in Figure 6. Alternatively, the first residual block may be obtained by modifying an existing residual block.

A manner of mapping the second intermediate feature to the first image feature and the second image feature that correspond to the to-be-detected image, through the first residual block, corresponds to an internal structure of the first residual block. Different manners of mapping may be adopted for different internal structures. For example, the first residual block is the conventional residual block as shown in Figure 5. Through the residual branch, the second intermediate feature is sequentially subject to convolution in the 3×3 common convolutional layer, batch normalization in the 3×3 batch normalization layer, nonlinear transformation in the 3×3 rectified linear unit layer, convolution at another 3×3 common convolutional layer, and batch normalization at another batch normalization layer. Through the short branch, the second intermediate feature is subject to identical mapping. A computation result of the residual branch and a computation result of the short branch are synthesized, and a result of the synthesis is subject to nonlinear transformation through the ReLU layer, to obtain an output result of the first residual block. In a case that the first residual block is a first target residual block, the output result of the first residual block is the first image feature corresponding to the to-be-detected image. In a case that the first residual block is a second target residual block, the output result of the first residual block is the second image feature corresponding to the to-be-detected image.

In an embodiment, a quantity of first residual blocks in the residual network is greater than one, and the first residual blocks are sequentially connected. In such case, the steps of performing the feature extraction on the first intermediate feature sequentially through all residual networks in the basic network, outputting the first image feature corresponding to the to-be-detected image through the first target residual network, and outputting the second image feature corresponding to the to-be-detected image through the second target residual network may include following steps. The feature extraction is performed on the first intermediate feature sequentially through the first residual blocks in all residual networks. The first image feature corresponding to the to-be-detected image is outputted through a first target residual block in the first target residual network. The second image feature corresponding to the to-be-detected image is outputted through a second target residual block in the second target residual network.

The first target residual block may be configured to output the first image feature corresponding to the to-be-detected image to the output network of the predetermined neural network. The first target residual block is selected from all first residual blocks in the first target residual network. The first target residual block may include one or more first residual blocks selected in advance from all first residual blocks included in the first target residual network.

The second target residual block may be configured to output the second image feature corresponding to the to-be-detected image to the output network of the predetermined neural network. Similarly, the second target residual block is selected from all first residual blocks in the second target residual network. The second target residual block may include one or more first residual blocks selected in advance from all first residual blocks included in the second target residual network.

In an embodiment, the first target residual block may include a first residual block located closest to an exit of the first target residual network. An output result of the first residual block located closest to the exit of the first target residual network is subject to a largest quantity of convolutional layers, among the first target residual network. Hence, the output result of the first residual block closest to the exit of the first target residual network is outputted, as the first image feature, to the output network of the predetermined neural network, so as to improve a performance of target detection. Similarly, the second target residual block may include a first residual block located closest to an exit of the second target residual network.

For example, both the first target residual network and the second target residual network include a residual network RN3, and the residual network RN3 includes four first residual blocks, i.e. a first residual block RB 1, a first residual block RB2, a first residual block RB3, and a first residual block RB4, which are connected sequentially. It is assumed that both the first target residual block and the second target residual block are predetermined to include the first residual block RB4. In such case, after the second intermediate feature is inputted into the residual network RN3, the first residual block RB 1 performs feature extraction on the second intermediate feature, the first residual block RB2 performs feature extraction on an output result of the first residual block RB 1, the first residual block RB3 performs feature extraction on an output result of the first residual block RB2, and the first residual block RB4 performs feature extraction on an output result of the first residual block RB3. An output result of the first residual block RB4 is outputted as the first image feature to the output network of the predetermined neural network, and is further outputted as the second image feature to the dilated convolutional network of the predetermined neural network.

In an embodiment, the step of mapping the second intermediate feature to the first image feature and the second image feature that correspond to the to-be-detected image through the first residual block in the residual network, and outputting the first image feature and the second image feature may include following steps. Depthwise separable convolution is performed based on the second intermediate feature through the first residual block in the residual network, to obtain a first feature component. Identical mapping is performed on the second intermediate feature, to obtain a second feature component. The first feature component and the second feature component are synthesized to obtain a first target feature. The first target feature is mapped to the first image feature and the second image feature that correspond to the to-be-detected image. The first image feature and the second image feature are outputted.

In this embodiment, the first residual block is obtained by modifying an existing residual block. The modification may be as follows: a 3×3 common convolutional layer for feature extraction in an existing residual block (for example, the residual block as shown in Figure 5 or Figure 6) is replaced with a depthwise separable convolutional layer.

In the depthwise separable convolution, each channel performs convolution with a convolution kernel, to obtain an output result corresponding to such channel, and then information is fused. Feature extraction based on the depthwise separable convolution can reduce a scale of the basic network and improve a computing speed of the network.

In this embodiment, the second intermediate feature is inputted into the first residual block. In the residual branch, the feature extraction is performed on the second intermediate feature through the depthwise separable convolutional layer, to obtain the first feature component corresponding to the second intermediate feature. In the short branch, the identical mapping is performed on the second intermediate feature, to obtain the second feature component corresponding to the second intermediate feature. Further, the first feature component and the second feature component are synthesized to obtain the first target feature. Then, the nonlinear transformation is performed on the first target feature through the ReLU layer, to obtain the output result of the first residual block. Synthesizing the two feature components may refer to adding the two feature components.

In an embodiment, the step of performing the depthwise separable convolution based on the second intermediate feature to obtain the first feature component may include a following step. Dimensionality reduction, depthwise separable convolution, and dimensionality raising are sequentially performed on the second intermediate feature, to obtain the first feature component.

In this embodiment, the residual branch in the first residual block may include a dimensionality reduction layer, the depthwise separable convolutional layer, and a dimensionality raising layer that are connected in the listed sequence. The dimensionality reduction layer is configured to perform dimensionality reduction on input information of the residual branch (that is, the second intermediate feature). Thereby, a quantity of parameters in the depthwise separable convolutional layer is reduced. The dimensionality raising layer is configured to perform dimensionality raising on an output result of the depthwise separable convolutional layer. Thereby, it is ensured that an input and an output of the residual branch are same in dimensions.

In an embodiment, the dimensionality reduction layer may include a 1×1 common convolutional layer, a 1×1 batch normalization layer, and a 1×1 ReLU layer that are connected in the listed sequence. The dimensionality raising layer may include a 1×1 common convolutional layer and a 1×1 batch normalization layer that are sequentially connected. In another embodiment, the dimensionality reduction layer and the dimensionality raising layer may adopt other suitable network architecture, which is not limited herein.

In this embodiment, the second intermediate feature is inputted into the residual branch in the first residual block. Firstly, the dimensionality reduction layer performs dimensionality reduction on the second intermediate feature. Then, the depthwise separable convolutional layer performs convolution on an output result of the dimensionality reduction layer. Afterwards, the dimensionality raising layer performs dimensionality raising on an output result of the depthwise separable convolutional layer, so as to obtain the first feature component.

In an embodiment, the step of performing the dilated convolution based on the second image feature through the dilated convolutional network in the predetermined neural network to obtain the third image feature corresponding to the to-be-detected image may include following steps. The dilated convolution is performed based on the second image feature through a second residual block in the dilated convolutional network, to obtain a third feature component. Linear mapping is performed on the second image feature, to obtain a fourth feature component. The third feature component and the fourth feature component are synthesized to obtain a second target feature. The second target feature is mapped to the third image feature corresponding to the to-be-detected image.

The second residual block is a residual block in the dilated convolutional network. Similarly, the second residual block may be obtained by modifying an existing residual block. The modification may be as follows: a 3×3 common convolutional layer for feature extraction in an existing residual block (for example, the residual block as shown in Figure 5 or in Figure 6) is replaced with a dilated convolutional layer.

In this embodiment, the second image feature is inputted into the second residual block. In a residual branch, the feature extraction is performed based on the second image feature through the dilated convolutional layer, to obtain the third feature component. In a short branch, the linear mapping is performed on the second image feature, to obtain the fourth feature component. Further, the third feature component and the fourth feature component are synthesized to obtain the second target feature. Then, the nonlinear transformation is performed on the second target feature through a ReLU layer, to obtain an output result of the second residual block (that is, the third image feature). The third image feature is outputted to the output network of the predetermined neural network.

In an embodiment, an additional convolutional layer for feature extraction is provided in the short branch of the second residual block. The additional convolutional layer may include a 1×1 common convolutional layer and a 1×1 batch normalization layer that are sequentially connected. Therefore, in the short branch, the 1×1 common convolutional layer performs convolution on input information of the second residual block, and then the 1×1 batch normalization layer performs batch normalization on an output result of the 1×1 common convolutional layer, to obtain the fourth feature component.

In an embodiment, a quantity of the second residual block in the dilated convolutional network is greater than one, and the second residual blocks are sequentially connected. In such case, the second image feature outputted from the basic network is sequentially subject to feature extraction of the second residual blocks in the dilated convolutional network. Output results of all residual blocks serve as the third image feature, which is outputted to the output network of the predetermined neural network.

In an embodiment, the step of performing the dilated convolution based on the second image feature through the second residual block in the dilated convolutional network to obtain the third feature component may include a following step. Dimensionality reduction, dilated convolution, and dimensionality raising are sequentially performed on the second image feature, to obtain the third feature component.

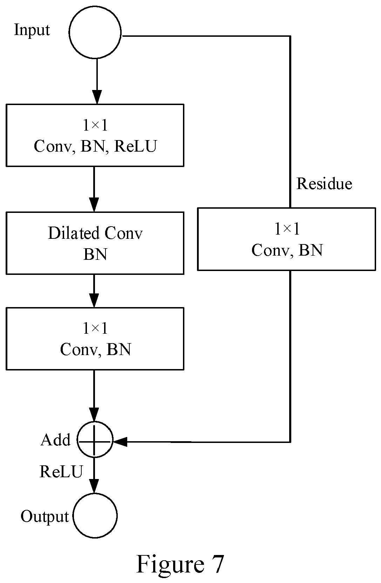

In this embodiment, the residual branch in the second residual block includes a dimensionality reduction layer, a dilated convolutional layer, and a dimensionality raising layer that are connected in the listed sequence, as shown in Figure 7.

In this embodiment, the residual branch is in the second residual block. First, the dimensionality reduction layer performs dimensionality reduction on the input information of the second residual block. Then, the dilated convolutional layer performs feature extraction on an output result of the dimensionality reduction layer. Afterwards, the dimensionality raising layer performs dimensionality raising on an output result of the dilated convolutional layer, so as to obtain the third feature component. The input information of the second residual network closest to an entry of the dilated convolutional network is the second image feature. The input information of the second residual network not closest to the entry of the dilated convolutional network is an output result of a residual block previous to such second residual block.

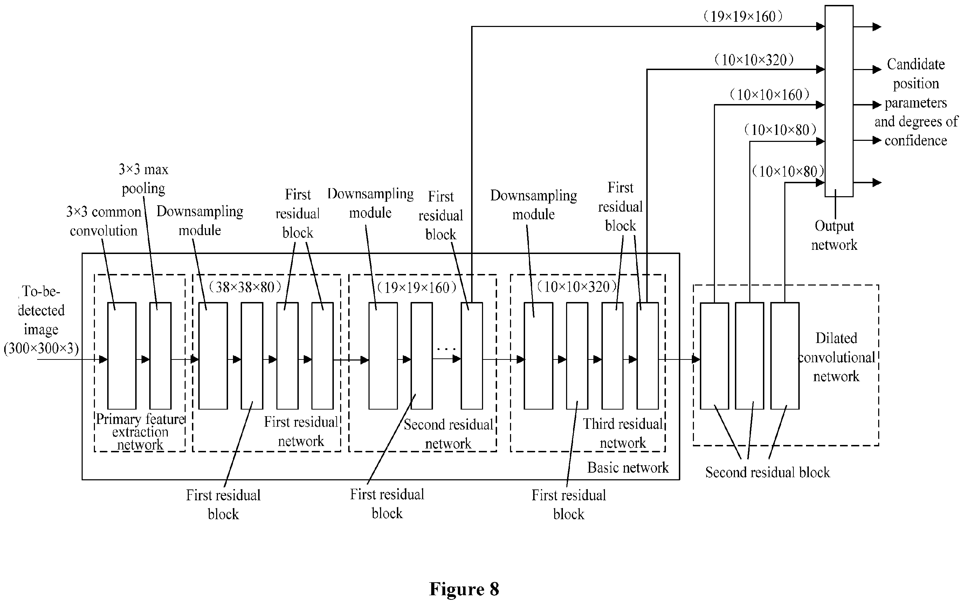

In an embodiment, a predetermined neural network is provided as shown in Figure 8. The predetermined neural network includes a basic network, a dilated convolutional network, and an output network. The basic network includes a primary feature extraction network, a first residual network, a second residual network, and a third residual network that are connected in the listed sequence. The primary feature extraction network includes a 3×3 common convolutional layer and a 3×3 max pooling layer that are sequentially connected. The first residual network includes a down-sampling module and three first residual blocks, which are sequentially connected. The second residual network includes a down-sampling module and seven first residual blocks, which are sequentially connected. The third residual network includes a down-sampling module and three first residual blocks, which are sequentially connected. The dilated convolutional network includes three second residual blocks that are sequentially connected.

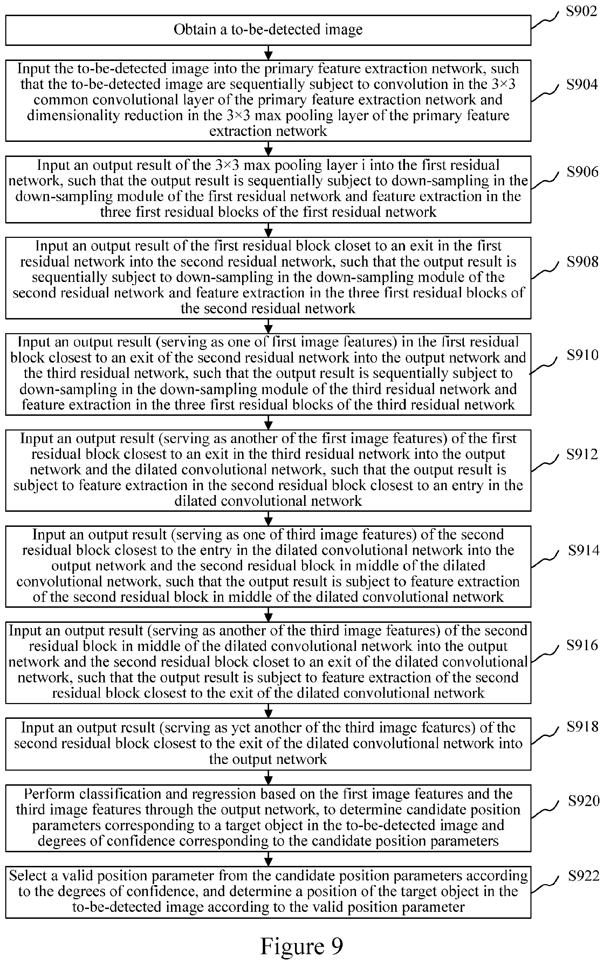

As shown in Figure 9, a method for target detection implemented by the predetermined neural network as shown in Figure 8 is provided. The method may include step S902 to step S922.

In step S902, a to-be-detected image is obtained. The to-be-detected image is a 300×300×3 image. That is, a scale of the image is 300×300, and there are 3 channels.

In step S904, the to-be-detected image is inputted into the primary feature extraction network, such that the to-be-detected image are sequentially subject to convolution in the 3×3 common convolutional layer of the primary feature extraction network and dimensionality reduction in the 3×3 max pooling layer of the primary feature extraction network.

In step S906, an output result of the 3×3 max pooling layer is inputted into the first residual network, such that the output result is sequentially subject to down-sampling in the down-sampling module of the first residual network and feature extraction in the three first residual blocks of the first residual network.

In step S908, an output result of the first residual block closet to an exit in the first residual network is inputted into the second residual network, such that the output result is sequentially subject to down-sampling in the down-sampling module of the second residual network and feature extraction in the three first residual blocks of the second residual network.

In step S910, an output result (serving as one of first image features) in the first residual block closest to an exit of the second residual network is inputted into the output network and the third residual network, such that the output result is sequentially subject to down-sampling in the down-sampling module of the third residual network and feature extraction in the three first residual blocks of the third residual network.

In step S912, an output result (serving as another of the first image features) of the first residual block closest to an exit in the third residual network is inputted into the output network and the dilated convolutional network, such that the output result is subject to feature extraction in the second residual block closest to an entry in the dilated convolutional network.

In step S914, an output result (serving as one of third image features) of the second residual block closest to the entry in the dilated convolutional network is inputted into the output network and the second residual block in middle of the dilated convolutional network, such that the output result is subject to feature extraction of the second residual block in middle of the dilated convolutional network.

In step S916, an output result (serving as another of the third image features) of the second residual block in middle of the dilated convolutional network is inputted into the output network and the second residual block closet to an exit of the dilated convolutional network, such that the output result is subject to feature extraction of the second residual block closest to the exit of the dilated convolutional network.

In step S918, an output result (serving as yet another of the third image features) of the second residual block closest to the exit of the dilated convolutional network is inputted into the output network.

In step S920, classification and regression are performed based on the first image features and the third image features through the output network, to determine candidate position parameters corresponding to a target object in the to-be-detected image and degrees of confidence corresponding to the candidate position parameters.

In step S922, a valid position parameter is selected from the candidate position parameters according to the degrees of confidence, and a position of the target object in the to-be-detected image is determined according to the valid position parameter.

Possible limitations on technical features in this embodiment may be similar to the limitations on corresponding technical features in the foregoing embodiments. Details are not repeated herein.

Although the steps in the flowcharts concerning the foregoing embodiments are displayed in sequence indicated by arrows, these steps are not necessarily performed in the order as indicated by the arrows. Unless expressly stated herein, the order in which these steps are performed is not strictly limited, and these steps may be performed in other orders. At least a part of the steps in the flowcharts may include multiple sub-steps or stages. These sub-steps or stages are not necessarily performed synchronously, and may be performed asynchronously. These sub-steps or stages are not necessarily performed in sequence, and may be performed in turn or performed alternately with other steps or at least a part of sub-steps or stages in other steps.

In the predetermined neural network, a quantity of channels in each layer may be uniformly scaled by a factor on requirement. That is, a width of the network may be dynamically adjusted, and thereby an effect and a speed of the network can be flexibly adjusted. In an actual experiment, a small network width coefficient is selected. A final scale of the basic network is 3M in a predetermined neural network that is pre-trained on an ImageNet (an image sample dataset), and final top-1 accuracy reaches 56%.

Consecutive structures of the CONV layer, the BN layer, and a Scale (linear transformation) layer in the predetermined neural network may be merged and simplified into one CONV layer, thereby reducing a network volume and improves a network speed. Experimental results show that the merging and the simplification are capable to reduce the network volume by 5% and increase the network speed by 5% to 10%.

In a case that the predetermined neural network is trained on a server through PyTorch, the predetermined neural network may be converted into a Caffe model for deploying the trained predetermined neural network on a mobile terminal. During deployment in the mobile terminal, the Caffe model may be converted into an NCNN model by using a conversion tool embedded in an NCNN framework (an open-source deep-learning forward framework developed by Tencent), and a format of model parameters may be converted during the conversion. Experimental results show that the model parameters can be quantized to 16 bits, and a scale of the model can be reduced from 2.1M to 960K through the merge and the simplification.

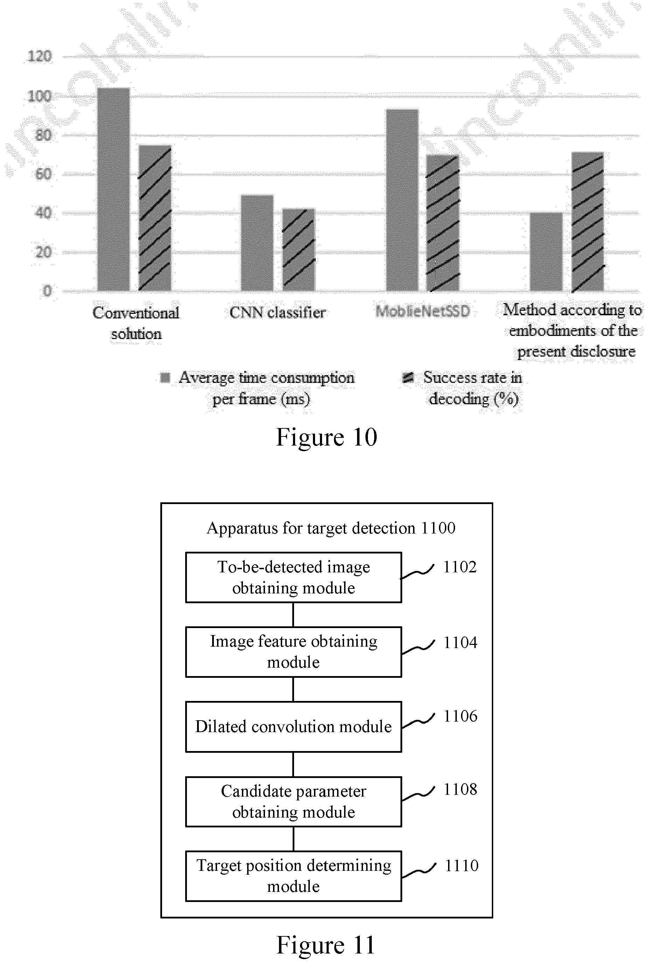

The method for target detection according to embodiments of the present disclosure may be applied to a scenario of identification code detection, where the target object is an identification code. After obtaining a to-be-detected image, a terminal first determines a position of the identification code in the to-be-detected image by using the method for target detection according to any embodiment of the present disclosure, and then recognizes the identification code in the to-be-detected image based on the position of the identification code in the to-be-detected image. In an application scenario of a small identification code in a large image, it is not necessary to scan interference information which does not include the code, thereby effectively improving a performance of recognition. In addition, the method for target detection also supports an application scenario of an image including multiple codes. In a case that the to-be-detected image includes multiple identification codes, all offset parameters are filtered according to corresponding degrees of confidence, and the target objects in the to-be-detected image are determined according to valid offset parameters obtained through the filtering. A quantity of positions at which the target objects are located matches a quantity of the identification codes in the to-be-detected image. As shown in Figure 10, the method for target detection according to embodiments of the present disclosure and a conventional solution for target detection are compared in average time consumption per frame and a success rate of decoding in identification code detection. It can be seen that the method for target detection according to embodiments of the present disclosure is capable to detect multiple identification codes with different scales and orientations in real time effectively. Not only accuracy and recall rate are high, but also time consumed in operation of the mobile terminal is short, thereby providing a high comprehensive performance.

An apparatus 1100 for target detection is provided according to an embodiment, as shown in Figure 11. The apparatus for target detection 1100 may include a to-be-detected image obtaining module 1102, an image feature obtaining module 1104, a dilated convolution module 1106, a candidate parameter obtaining module 1108, and a target position determining module 1110.

The to-be-detected image obtaining module 1102 is configured to obtain a to-be-detected image.

The image feature obtaining module 1104 is configured to extract a first image feature and a second image feature that correspond to the to-be-detected image.

The dilated convolution module 1106 is configured to perform dilated convolution based on the second image feature, to obtain a third image feature corresponding to the to-be-detected image.

The candidate parameter obtaining module 1108 is configured to perform classification and regression based on the first image feature and the third image feature, to determine candidate position parameters corresponding to a target object in the to-be-detected image and degrees of confidence corresponding to the candidate position parameters.

The target position determining module 1110 is configured to select a valid position parameter from the candidate position parameters according to the degrees of confidence, and determine a position of the target object in the to-be-detected image according to the valid position parameter.

According to the apparatus for target detection, the first image feature and the second image feature that correspond to the to-be-detected image are extracted. Then, the dilated convolution is performed based on the second image feature, to obtain the third image feature corresponding to the to-be-detected image. Further, the classification and the regression are performed based on the first image feature and the third image feature, and the position of the target object in the to-be-detected image is determined according to a result of the classification and the regression. Thereby, the image features corresponding to the to-be-detected image are automatically extracted, and the classification and the regression are performed based on the extracted image features, which improves robustness and reduces time consumption in detection effectively. In addition, a receptive field can be effectively expanded through dilated convolution, which adapts well to target objects with different sizes in detection.

The image feature obtaining module 1104 is configured to extract and output the first image feature and the second image feature that correspond to the to-be-detected image through a basic network in a predetermined neural network. The dilated convolution module 1106 is configured to perform the dilated convolution based on the second image feature through a dilated convolutional network in the predetermined neural network, to obtain and output the third image feature corresponding to the to-be-detected image. The candidate parameter obtaining module 1108 is configured to perform the classification and the regression based on the first image feature and the third image feature through an output network in the predetermined neural network, to determine the candidate position parameters corresponding to the target object in the to-be-detected image and the degrees of confidence corresponding to the candidate position parameters.

The image feature obtaining module 1104 includes a first intermediate feature output unit and an image feature obtaining unit. The first intermediate feature output unit is configured to perform convolution and pooling sequentially on the to-be-detected image through a primary feature extraction network in the basic network, to output a first intermediate feature corresponding to the to-be-detected image. The image feature obtaining unit is configured to perform feature extraction based on the first intermediate feature through a residual network in the basic network, to obtain and output the first image feature and second image feature that correspond to the to-be-detected image.

In an embodiment, the image feature obtaining unit may include a down-sampling subunit and a residual processing subunit. The down-sampling subunit is configured to perform down-sampling on the first intermediate feature through a down-sampling module in the residual network, to obtain and output a second intermediate feature. The residual processing subunit is configured to map the second intermediate feature to the first image feature and the second image feature that correspond to the to-be-detected image, through a first residual block in the residual network, and output the first image feature and the second image feature.

In an embodiment, the residual processing subunit may be further configured to: perform depthwise separable convolution based on the second intermediate feature through the first residual block in the residual network, to obtain a first feature component; perform identical mapping on the second intermediate feature, to obtain a second feature component; synthesize the first feature component and the second feature component, to obtain a first target feature; map the first target feature to the first image feature and the second image feature that correspond to the to-be-detected image; and output the first image feature and the second image feature.

In an embodiment, the residual processing subunit may be further configured to: perform dimensionality reduction, depthwise separable convolution, and dimensionality raising sequentially on the second intermediate feature, to obtain the first feature component.

In an embodiment, a quantity of the residual network in the basic network is greater than one, and the residual networks are sequentially connected. On such basis, the image feature obtaining unit may be further configured to: perform the feature extraction on the first intermediate feature sequentially through all residual networks in the basic network; output the first image feature corresponding to the to-be-detected image through a first target residual network; and output the second image feature corresponding to the to-be-detected image through a second target residual network. Both the first target residual network and the second target residual network are selected from the residual networks in the basic network.

In an embodiment, a quantity of the first residual block in the residual network is greater than one, and the first residual blocks are sequentially connected. On such basis, the image feature obtaining unit may be configured to: perform the feature extraction on the first intermediate feature sequentially through the first residual blocks in all residual networks; output the first image feature corresponding to the to-be-detected image through a first target residual block in the first target residual network; and output the second image feature corresponding to the to-be-detected image through a second target residual block in the second target residual network. The first target residual block is selected from the first residual blocks in the first target residual network, and the second target residual block is selected from the first residual blocks in the second target residual network.

In an embodiment, the dilated convolution module 1106 may include a dilated convolution unit, a linear mapping unit, a feature combining unit, and a feature mapping unit. The dilated convolution unit is configured to perform the dilated convolution based on the second image feature through a second residual block in the dilated convolutional network, to obtain a third feature component. The linear mapping unit is configured to perform linear mapping on the second image feature, to obtain a fourth feature component. The feature combining unit is configured to synthesize the third feature component and the fourth feature component, to obtain a second target feature. The feature mapping unit is configured to map the second target feature to the third image feature corresponding to the to-be-detected image.

In an embodiment, the dilated convolution unit may be further configured to: perform dimensionality reduction, dilated convolution, and dimensionality raising sequentially on the second image feature, to obtain the third feature component.

In an embodiment, the to-be-detected image obtaining module 1102 may include the an original image obtaining unit, a description information obtaining unit, and a resolution adjustment unit. The original image obtaining unit is configured to obtain an original image. The description information obtaining unit is configured to obtain terminal descriptive information characterizing a computing capability of a terminal. The resolution adjustment unit is configured to adjust the original image according to a reference resolution that matches the terminal descriptive information, to obtain the to-be-detected image.

In an embodiment, the target object includes an identification code. The identification code includes at least one of: a QR code, a one-dimensional code, or an applet code.

Limitations concerning the apparatus for target detection may refer to the limitations of the method for target detections in the foregoing embodiments, and details are not described again herein. All or some of the modules in the apparatus for target detection may be implemented in software, hardware, or a combination of the two. The foregoing modules may be embedded in or independent from a processor of a computer device in a form of hardware, or may be stored in a memory of a computer device in a form of software, so as to facilitate a processor invoking and performing operations corresponding to the foregoing modules.

In an embodiment, a computer device is provided, including a memory and a processor. The memory stores a computer program. The processor when executing the computer program performs the steps of the method for model training provided according to any embodiment of the present disclosure.

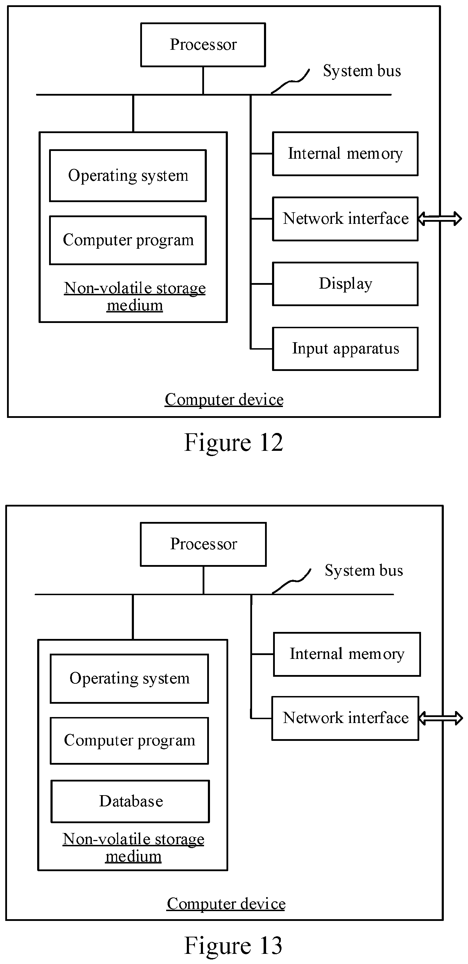

In an embodiment, the computer device may be the terminal 110 as shown in Figure 1. An internal structure of the computer device may be as shown in Figure 12. The computer device includes a processor, a memory, a network interface, a display, and an input apparatus that are connected via a system bus. The processor is configured to provide computing and control capabilities. The memory includes a non-volatile storage medium and an internal memory. The non-volatile storage medium stores an operating system and a computer program. The internal memory provides an environment for running the operating system and the computer program in the non-volatile storage medium. The computer program is executed by the processor to implement the method for target detection. The network interface is configured to communicate with an external terminal through a network connection. The display may be a liquid crystal display or an electronic ink display. The input apparatus of the computer device may be a touch layer covering the display, may be a key, a trackball, or a touchpad disposed on a housing of the computer device, or may be an external keyboard, touchpad, or mouse.

In another embodiment, the computer device may be the server 120 as shown in Figure 1. An internal structure of the computer device may be as shown in Figure 13. The computer device includes a processor, a memory, a network interface, and a database that are connected via a system bus. The processor is configured to provide computing and control capabilities. The memory includes a non-volatile storage medium and an internal memory. The non-volatile storage medium stores an operating system, a computer program, and a database. The internal memory provides an environment for running the operating system and the computer program in the non-volatile storage medium. The database is configured to store the feature distribution parameter. The network interface is configured to communicate with an external terminal via a network connection. The computer program is executed by the processor to implement the method for target detection.

A person skilled in the art may understand that the structure shown in Figure 12 and Figure 13 are merely block diagrams of a part of the structures related to the solution of the present disclosure, and do not constitute a limitation to the computer device to which the solution of the present disclosure is applied. In a specific embodiment, the computer device may include more or fewer components than those shown in the figure, some components may be combined, or a different component configuration may be used.

In an embodiment, the apparatus for target detection according to embodiments of the present disclosure may be implemented in a form of a computer program, and the computer program may be executed on the computer device as shown in Figure 12 or Figure 13. The memory of the computer device may store a program module included in the apparatus for target detection, for example, the to-be-detected image obtaining module 1102, the image feature obtaining module 1104, the dilated convolution module 1106, the candidate parameter obtaining module 1108, and the target position determining module 1110 as shown in Figure 11. The computer program formed by the program modules configures the processor to perform the steps of the method for target detection according to embodiments of the present disclosure. For example, the computer device shown in Figure 12 or Figure 13 may perform the step S202 by using the to-be-detected image obtaining module 1102, perform the step S204 by using the image feature obtaining module 1104, perform the step S206 by using the dilated convolution processing module 1106, perform the step S208 by using the candidate parameter obtaining module 1108, and perform the step S210 by using the target location determining module 1110, and the like, in the apparatus for target detection as shown in Figure 11.

A person of ordinary skill in the art may understand that all or some of the processes in the foregoing method embodiments may be implemented by a computer program instructing related hardware. The program may be stored in a non-volatile computer-readable storage medium, and the program when executed may include a flow in the foregoing method embodiments. Any reference to the memory, storage, database, or other media used in the embodiments provided in the present disclosure may include a non-volatile and/or volatile memory. The non-volatile memory may include a read-only memory (ROM), a programmable ROM (PROM), an electrically programmable ROM (EPROM), an electrically erasable programmable ROM (EEPROM), or a flash. The volatile memory may include a random access memory (RAM) or an external cache. As an example but not limitation, the RAM is available in various forms, such as a static RAM (SRAM), a dynamic RAM (DRAM), a synchronous DRAM (SDRAM), a double data rate SDRAM (DDRSDRAM), an enhanced SDRAM (ESDRAM), a synchronization link (Synchlink) DRAM (SLDRAM), a rambus direct RAM (RDRAM), a direct rambus dynamic RAM (DRDRAM), or a rambus dynamic RAM (RDRAM).

On such basis, a computer-readable storage medium is provided in an embodiment. The computer-readable storage medium stores a computer program. The computer program when executed by a processor performs the method for target detection according to any embodiment of the present disclosure.

The foregoing embodiments only describe several implementations of the present disclosure, which are specifically described in detail, and should not be construed as a limitation to the patent scope of the present disclosure. The scope of protection of the present disclosure is given by the appended claims.

## Claims

1. A computer-implemented method for target object detection, wherein the method comprises:
obtaining (S202) a to-be-detected image;
extracting (S204), through a predetermined neural network, a first image feature and a second image feature that correspond to the to-be-detected image, wherein the predetermined neural network is capable of target object detection and obtained by training a neural network based on sample images in which a position of the target object is marked;
performing (S206) dilated convolution on the second image feature, to obtain a third image feature corresponding to the to-be-detected image;
performing (S208) classification and regression on a plurality of preset bounding boxes corresponding to the first image feature and the third image feature, to determine candidate position parameters corresponding to the target object in the to-be-detected image and degrees of confidence corresponding to the candidate position parameters, wherein the bounding boxes are configured to predict positions of the target object in the to-be detected image;
selecting (S210) a valid position parameter from the candidate position parameters according to the degrees of confidence, wherein the valid position parameter is one of the candidate position parameters that meets a predetermined selection condition; and
determining (S210) a position of the target object in the to-be-detected image according to the valid position parameter;
wherein extracting the first image feature and the second image feature that correspond to the to-be-detected image comprises:
extracting and outputting the first image feature and the second image feature that correspond to the to-be-detected image through a basic network in the predetermined neural network;
wherein performing the dilated convolution on the second image feature to obtain the third image feature corresponding to the to-be-detected image comprises:
performing the dilated convolution on the second image feature through a dilated convolutional network in the predetermined neural network, to obtain and output the third image feature corresponding to the to-be-detected image;
wherein performing the classification and the regression on the plurality of bounding boxes corresponding to the first image feature and the third image feature to determine the candidate position parameters corresponding to the target object in the to-be-detected image and the degrees of confidence corresponding to the candidate position parameters comprises:
performing the classification and the regression on the plurality of bounding boxes corresponding to the first image feature and the third image feature through an output network in the
predetermined neural network, to determine the candidate position parameters corresponding to the target object in the to-be-detected image and the degrees of confidence corresponding to the candidate position parameters; and
the method is **characterized in that** extracting and outputting the first image feature and the second image feature that correspond to the to-be-detected image through the basic network in the predetermined neural network comprises:
performing convolution and pooling sequentially on the to-be-detected image through a primary feature extraction network in the basic network, to output a first intermediate feature corresponding to the to-be-detected image; and
performing feature extraction based on the first intermediate feature through a residual network in the basic network, to obtain and output the first image feature and second image feature that correspond to the to-be-detected image.

2. The method according to claim 1, wherein performing the feature extraction based on the first intermediate feature through the residual network in the basic network, to obtain and output the first image feature and second image feature that correspond to the to-be-detected image comprises:
performing down-sampling on the first intermediate feature through a down-sampling module in the residual network, to obtain and output a second intermediate feature;
mapping, through a first residual block in the residual network, the second intermediate feature to the first image feature and the second image feature that correspond to the to-be-detected image; and
outputting the first image feature and the second image feature.

3. The method according to claim 2, wherein mapping, through the first residual block in the residual network, the second intermediate feature to the first image feature and the second image feature that correspond to the to-be-detected image, and outputting the first image feature and the second image feature, comprise:
performing depthwise separable convolution based on the second intermediate feature through the first residual block in the residual network, to obtain a first feature component;
performing identical mapping on the second intermediate feature, to obtain a second feature component;
synthesizing the first feature component and the second feature component, to obtain a first target feature;
mapping the first target feature to the first image feature and the second image feature that correspond to the to-be-detected image; and
outputting the first image feature and the second image feature.

4. The method according to claim 3, wherein performing the depthwise separable convolution based on the second intermediate feature through the first residual block in the residual network to obtain the first feature component comprises:
performing dimensionality reduction, depthwise separable convolution, and dimensionality raising sequentially on the second intermediate feature, to obtain the first feature component.

5. The method according to claim 2, wherein:
a quantity of the residual network in the basic network is greater than one, and the residual networks are sequentially connected;
performing the feature extraction based on the first intermediate feature through the residual network in the basic network, to obtain and output the first image feature and second image feature that correspond to the to-be-detected image, comprises:
performing the feature extraction on the first intermediate feature sequentially through all residual networks in the basic network;
outputting the first image feature corresponding to the to-be-detected image through a first target residual network; and
outputting the second image feature corresponding to the to-be-detected image through a second target residual network; and
both the first target residual network and the second target residual network are selected from the residual networks in the basic network.

6. The method according to claim 5, wherein:
a quantity of the first residual block in the residual network is greater than one, and the first residual blocks are sequentially connected;
performing the feature extraction on the first intermediate feature sequentially through all residual networks in the basic network, outputting the first image feature corresponding to the to-be-detected image through the first target residual network, and outputting the second image feature corresponding to the to-be-detected image through a second target residual network comprises:
performing the feature extraction on the first intermediate feature sequentially through the first residual blocks in all residual networks;
outputting the first image feature corresponding to the to-be-detected image through a first target residual block in the first target residual network; and
outputting the second image feature corresponding to the to-be-detected image through a second target residual block in the second target residual network; and
the first target residual block is selected from the first residual blocks in the first target residual network, and the second target residual block being selected from the first residual blocks in the second target residual network.

7. The method according to claim 1, wherein performing the dilated convolution based on the second image feature through the dilated convolutional network in the predetermined neural network, to obtain and output the third image feature corresponding to the to-be-detected image, comprises:
performing the dilated convolution based on the second image feature through a second residual block in the dilated convolutional network, to obtain a third feature component;
performing linear mapping on the second image feature, to obtain a fourth feature component;
synthesizing the third feature component and the fourth feature component, to obtain a second target feature; and
mapping the second target feature to the third image feature corresponding to the to-be-detected image.

8. The method according to claim 7, wherein performing the dilated convolution based on the second image feature to obtain the third feature component comprises:
performing dimensionality reduction, dilated convolution, and dimensionality raising sequentially on the second image feature, to obtain the third feature component.

9. The method according to claim 1, wherein obtaining the to-be-detected image comprises:
obtaining an original image;
obtaining terminal descriptive information that characterizes a computing capability of a terminal; and
adjusting the original image according to a reference resolution that matches the terminal descriptive information, to obtain the to-be-detected image.

10. The method according to any one of claims 1 to 9, wherein:
the target object comprises an identification code, and
the identification code comprises at least one of: a QR code, a one-dimensional code, or an applet code.

11. A computer-readable storage medium, storing a computer program, wherein:
the computer program when executed by a processor implements the method for target detection according to any one of claims 1 to 9.

12. A computer device, comprising:
a memory, and
a processor,
wherein the memory stores a computer program, and
wherein the processor when executing the computer program implements the method for target detection according to any one of claims 1 to 9.

## Patentansprüche

1. Computerimplementiertes Verfahren zur Zielobjekterkennung, wobei das Verfahren Folgendes umfasst:
Gewinnen (S202) eines zu erkennenden Bildes,
Extrahieren (S204) eines ersten Bildmerkmals und eines zweiten Bildmerkmals, die dem zu erkennenden Bild entsprechen, durch ein festgelegtes neuronales Netz, wobei das festgelegte neuronale Netz zur Zielobjekterkennung fähig ist und durch Trainieren eines neuronalen Netzes basierend auf Musterbildern, in denen eine Position des Zielobjekts markiert ist, gewonnen wird,
Durchführen (S206) einer erweiterten Faltung an dem zweiten Bildmerkmal, um ein drittes Bildmerkmal zu gewinnen, das dem zu erkennenden Bild entspricht,
Durchführen (S208) von Klassifizierung und Regression an mehreren voreingestellten Begrenzungsrahmen entsprechend dem ersten Bildmerkmal und dem dritten Bildmerkmal, um Kandidatenpositionsparameter, die dem Zielobjekt in dem zu erkennenden Bild entsprechen, und Vertrauensgrade, die den Kandidatenpositionsparametern entsprechen, zu bestimmen, wobei die Begrenzungsrahmen dafür gestaltet sind, Positionen des Zielobjekts in dem zu erkennenden Bild vorherzusagen,
Auswählen (S210) eines gültigen Positionsparameters aus den Kandidatenpositionsparametern gemäß den Vertrauensgraden, wobei der gültige Positionsparameter einer der Kandidatenpositionsparameter ist, der eine festgelegte Auswahlbedingung erfüllt, und
Bestimmen (S210) einer Position des Zielobjekts in dem zu erkennenden Bild gemäß dem gültigen Positionsparameter,
wobei das Extrahieren des ersten Bildmerkmals und des zweiten Bildmerkmals, die dem zu erkennenden Bild entsprechen, Folgendes umfasst:
Extrahieren und Ausgeben des ersten Bildmerkmals und des zweiten Bildmerkmals, die dem zu erkennenden Bild entsprechen, durch ein Basisnetz in dem festgelegten neuronalen Netz,
wobei das Durchführen der erweiterten Faltung an dem zweiten Bildmerkmal, um das dritte Bildmerkmal zu gewinnen, das dem zu erkennenden Bild entspricht, Folgendes umfasst:
Durchführen der erweiterten Faltung an dem zweiten Bildmerkmal durch ein Netz zur erweiterten Faltung in dem festgelegten neuronalen Netz, um das dritte Bildmerkmal, das dem zu erkennenden Bild entspricht, zu gewinnen und auszugeben,
wobei das Durchführen der Klassifizierung und der Regression an den mehreren Begrenzungsrahmen, die dem ersten Bildmerkmal und dem dritten Bildmerkmal entsprechen, um die Kandidatenpositionsparameter, die dem Zielobjekt in dem zu erkennenden Bild entsprechen, und die Vertrauensgrade, die den Kandidatenpositionsparametern entsprechen, zu bestimmen, Folgendes umfasst:
Durchführen der Klassifizierung und der Regression an den mehreren Begrenzungsrahmen, die dem ersten Bildmerkmal und dem dritten Bildmerkmal entsprechen, durch ein Ausgabenetz in dem festgelegten neuronalen Netz, um die Kandidatenpositionsparameter, die dem Zielobjekt in dem zu erkennenden Bild entsprechen, und die Vertrauensgrade, die den Kandidatenpositionsparametern entsprechen, zu bestimmen, und
wobei das Verfahren **dadurch gekennzeichnet ist, dass** das Extrahieren und Ausgeben des ersten Bildmerkmals und des zweiten Bildmerkmals, die dem zu erkennenden Bild entsprechen, durch das Basisnetz in dem festgelegten neuronalen Netz Folgendes umfasst:
sequentielles Durchführen von Faltung und Zusammenschließen (Pooling) an dem zu erkennenden Bild durch ein Netz zum Extrahieren primärer Merkmale in dem Basisnetz, um ein erstes Zwischenmerkmal auszugeben, das dem zu erkennenden Bild entspricht, und
Durchführen von Merkmalextraktion basierend auf dem ersten Zwischenmerkmal durch ein Restnetz in dem Basisnetz, um das erste Bildmerkmal und das zweite Bildmerkmal, die dem zu erkennenden Bild entsprechen, zu gewinnen und auszugeben.

2. Verfahren nach Anspruch 1, wobei das Durchführen der Merkmalextraktion basierend auf dem ersten Zwischenmerkmal durch das Restnetz in dem Basisnetz, um das erste Bildmerkmal und das zweite Bildmerkmal, die dem zu erkennenden Bild entsprechen, zu gewinnen und auszugeben, Folgendes umfasst:
Durchführen von Down-Sampling an dem ersten Zwischenmerkmal durch ein Down-Sampling-Modul in dem Restnetz, um ein zweites Zwischenmerkmal zu gewinnen und auszugeben,
Abbilden des zweiten Zwischenmerkmals auf das erste Bildmerkmal und das zweite Bildmerkmal, die dem zu erkennenden Bild entsprechen, durch einen ersten Restblock in dem Restnetz und
Ausgeben des ersten Bildmerkmals und des zweiten Bildmerkmals.

3. Verfahren nach Anspruch 2, wobei das Abbilden des zweiten Zwischenmerkmals auf das erste Bildmerkmal und das zweite Bildmerkmal, die dem zu erkennenden Bild entsprechen, und das Ausgeben des ersten Bildmerkmals und des zweiten Bildmerkmals durch den ersten Restblock in dem Restnetz Folgendes umfasst:
Durchführen einer separierbaren Faltung in die Tiefe basierend auf dem zweiten Zwischenmerkmal durch den ersten Restblock in dem Restnetz, um eine erste Merkmalkomponente zu gewinnen,
Durchführen identischen Abbildens an dem zweiten Zwischenmerkmal, um eine zweite Merkmalkomponente zu gewinnen,
Synthetisieren der ersten Merkmalkomponente und der zweiten Merkmalkomponente, um ein ersten Zielmerkmal zu gewinnen,
Abbilden des ersten Zielmerkmals auf das erste Bildmerkmal und das zweite Bildmerkmal, die dem zu erkennenden Bild entsprechen, und
Ausgeben des ersten Bildmerkmals und des zweiten Bildmerkmals.

4. Verfahren nach Anspruch 3, wobei das Durchführen der separierbaren Faltung in die Tiefe basierend auf dem zweiten Zwischenmerkmal durch den ersten Restblock in dem Restnetz, um die erste Merkmalkomponente zu gewinnen, Folgendes umfasst:
sequentielles Durchführen von Dimensionalitätsreduktion, separierbarer Faltung in die Tiefe und Dimensionalitätsvergrößerung an dem zweiten Zwischenmerkmal, um die erste Merkmalkomponente zu gewinnen.

5. Verfahren nach Anspruch 2, wobei:
eine Menge der Restnetze in dem Basisnetz größer als eins ist und die Restnetze sequentiell verbunden werden,
das Durchführen der Merkmalextraktion basierend auf dem ersten Zwischenmerkmal durch das Restnetz in dem Basisnetz, um das erste Bildmerkmal und das zweite Bildmerkmal, die dem zu erkennenden Bild entsprechen, zu gewinnen und auszugeben, Folgendes umfasst:
sequentielles Durchführen der Merkmalextraktion an dem ersten Zwischenmerkmal durch alle Restnetze in dem Basisnetz,
Ausgeben des ersten Bildmerkmals, das dem zu erkennenden Bild entspricht, durch ein erstes Zielrestnetz und
Ausgeben des zweiten Bildmerkmals, das dem zu erkennenden Bild entspricht, durch ein zweites Zielrestnetz, und
wobei sowohl das erste Zielrestnetz als auch das zweite Zielrestnetz aus den Restnetzen in dem Basisnetz ausgewählt werden.

6. Verfahren nach Anspruch 5, wobei:
eine Menge der ersten Restblöcke in dem Restnetz größer als eins ist und die Restnetzblöcke sequentiell verbunden werden,
das sequentielle Durchführen der Merkmalextraktion an dem ersten Zwischenmerkmal durch alle Restnetze in dem Basisnetz, das Ausgeben des ersten Bildmerkmals, das dem zu erkennenden Bild entspricht, durch das erste Zielrestnetz und das Ausgeben des zweiten Bildmerkmals, das dem zu erkennenden Bild entspricht, durch ein zweites Zielrestnetz Folgendes umfasst:
sequentielles Durchführen der Merkmalextraktion an dem ersten Zwischenmerkmal durch die ersten Restblöcke in allen Restnetzen,
Ausgeben des ersten Bildmerkmals, das dem zu erkennenden Bild entspricht, durch einen ersten Zielrestblock in dem ersten Zielrestnetz und
Ausgeben des zweiten Bildmerkmals, das dem zu erkennenden Bild entspricht, durch einen zweiten Zielrestblock in dem zweiten Zielrestnetz und
wobei der erste Zielrestblock aus den ersten Restblöcken in dem ersten Zielrestnetz ausgewählt wird und der zweite Zielrestblock aus den ersten Zielrestblöcken in dem zweiten Zielrestnetz ausgewählt wird.

7. Verfahren nach Anspruch 1, wobei das Durchführen der erweiterten Faltung basierend auf dem zweiten Bildmerkmal durch das Netz zur erweiterten Faltung in dem festgelegten neuronalen Netz, um das dritte Bildmerkmal, das dem zu erkennenden Bild entspricht, zu gewinnen und auszugeben, Folgendes umfasst:
Durchführen der erweiterten Faltung basierend auf dem zweiten Bildmerkmal durch einen zweiten Restblock in dem Netz zur erweiterten Faltung, um eine dritte Merkmalkomponente zu gewinnen,
Durchführen linearen Abbildens an dem zweiten Bildmerkmal, um eine vierte Merkmalkomponente zu gewinnen,
Synthetisierend der dritten Merkmalkomponente und der vierten Merkmalkomponente, um ein zweites Zielmerkmal zu gewinnen, und
Abbilden des zweiten Zielmerkmals auf das dritte Bildmerkmal, das dem zu erkennenden Bild entspricht.

8. Verfahren nach Anspruch 7, wobei das Durchführen der erweiterten Faltung basierend auf dem zweiten Bildmerkmal, um eine dritte Merkmalkomponente zu gewinnen, Folgendes umfasst:
sequentielles Durchführen von Dimensionalitätsreduktion, erweiterter Faltung und Dimensionalitätsvergrößerung an dem zweien Zwischenmerkmal, um die dritte Merkmalkomponente zu gewinnen.

9. Verfahren nach Anspruch 1, wobei das Gewinnen des zu erkennenden Bildes Folgendes umfasst:
Gewinnen eines ursprünglichen Bildes,
Gewinnen von ein Endgerät beschreibenden Informationen, die eine Rechenfähigkeit eines Endgeräts beschreiben, und
Justieren des ursprünglichen Bildes gemäß einer Referenzauflösung, die mit den ein Endgerät beschreibenden Informationen übereinstimmt, um das zu erkennende Bild zu gewinnen.

10. Verfahren nach einem der Ansprüche 1 bis 9, wobei:
das Zielobjekt einen Identifizierungscode umfasst und
der Identifizierungscode mindestens eines des Folgenden umfasst. einen QR-Code, einen eindimensionalen Code oder einen Applet-Code.

11. Computerlesbares Speichermedium, das ein Computerprogramm speichert, wobei:
das Computerprogramm bei Ausführung durch einen Prozessor das Verfahren zur Zielerkennung nach einem der Ansprüche 1 bis 9 implementiert.

12. Rechengerät, Folgendes umfassend:
einen Speicher und
einen Prozessor,
wobei der Speicher ein Computerprogramm speichert und
wobei der Prozessor beim Ausführen des Computerprogramms das Verfahren zur Zielerkennung nach einem der Ansprüche 1 bis 9 implementiert.

## Revendications

1. Procédé mis en oeuvre par ordinateur de détection d'un objet cible, ce procédé comprenant :
l'obtention (S202) d'une image à détecter,
l'extraction (S204), à travers un réseau neuronal prédéterminé, d'une première caractéristique d'image et d'une deuxième caractéristique d'image qui correspondent à l'image à détecter, le réseau neuronal prédéterminé étant capable d'une détection d'objets cibles et obtenu en entraînant un réseau neuronal en se basant sur des échantillons d'images dans lesquels une position de l'objet cible est marquée ;
la réalisation (S206) d'une convolution dilatée sur la deuxième caractéristique d'image afin d'obtenir une troisième caractéristique d'image correspondant à l'image à détecter ;
la réalisation (S208) d'une classification et d'une régression sur une pluralité de cadres de limitation préétablis correspondant à la première caractéristique d'image et à la troisième caractéristique d'image afin de déterminer des paramètres de position candidats correspondant à l'objet cible dans l'image à détecter et des degrés de confiance correspondant aux paramètres de position candidats, les cadres de limitation étant configurés pour prédire des positions de l'objet cible dans l'image détecter ;
la sélection (S210) d'un paramètre de position valable parmi les paramètres de position candidats en fonction des degrés de confiance, le paramètre de position valable étant un des paramètres de position candidats qui remplit une condition de sélection prédéterminée ; et
la détermination (S210) d'une position de l'objet cible dans l'image à détecter en fonction du paramètre de position valable ;
l'extraction de la première caractéristique d'image et de la deuxième caractéristique d'image qui correspondent à l'image à détecter comprenant :
l'extraction et l'édition de la première caractéristique d'image et de la deuxième caractéristique d'image qui correspondent à l'image à détecter à travers un réseau basique dans le réseau neuronal prédéterminé ;
la réalisation de la convolution dilatée sur la deuxième caractéristique d'image pour obtenir la troisième caractéristique d'image correspondant à l'image à détecter comprenant :
la réalisation de la convolution dilatée sur la deuxième caractéristique d'image à travers un réseau convolutionnel dilaté dans le réseau neuronal prédéterminé dans le réseau neuronal prédéterminé pour obtenir et éditer la troisième caractéristique d'image correspondant à l'image à détecter ;
la réalisation de la classification et de la régression sur la pluralité de cadres de limitation correspondant à la première caractéristique d'image et à la troisième caractéristique image pour déterminer les paramètres de position candidats correspondant à l'objet cible dans l'image à détecter et les degrés de confiance correspondant aux paramètres de position candidats comprenant :
la réalisation de la classification et de la régression sur la pluralité de cadres de limitation correspondant à la première caractéristique d'image et la troisième caractéristique d'image à travers un réseau d'édition dans le réseau neuronal prédéterminé pour déterminer les paramètres de position candidats correspondant à l'objet cible dans l'image à détecter et les degrés de confiance correspondant aux paramètres de position candidats ; et
le procédé étant **caractérisé en ce que** l'extraction et l'édition de la première caractéristique d'image et de la deuxième caractéristique d'image correspondent à l'image à détecter à travers le réseau basique dans le réseau neuronal prédéterminé comprend :
la réalisation d'une convolution et d'une mise en commun séquentielles sur l'image à détecter à travers un réseau d'extraction de caractéristiques primaires dans le réseau basique afin d'éditer une première caractéristique intermédiaire correspondant à l'image à détecter ; et
la réalisation d'une extraction de caractéristique en se basant sur la première caractéristique intermédiaire à travers un réseau résiduel dans le réseau basique pour obtenir et éditer la première caractéristique d'image et la deuxième caractéristique d'image qui correspondent à l'image à détecter.

2. Procédé selon la revendication 1, dans lequel la réalisation de l'extraction de caractéristique en se basant sur la première caractéristique intermédiaire à travers le réseau résiduel dans le réseau basique pour obtenir et éditer la première caractéristique d'image et la deuxième caractéristique image qui correspondent à l'image à détecter comprend :
la réalisation d'un sous-échantillonnage sur la première caractéristique intermédiaire à travers un module de sous-échantillonnage dans le réseau résiduel pour obtenir et éditer une deuxième caractéristique intermédiaire ;
la cartographie, à travers un premier bloc résiduel dans le réseau résiduel, de la deuxième caractéristique intermédiaire vers la première caractéristique d'image et la deuxième caractéristique d'image qui correspondent à l'image à détecter ; et
l'édition de la première caractéristique d'image et de la deuxième caractéristique d'image.

3. Procédé selon la revendication 2, dans lequel la cartographie, à travers le premier bloc résiduel dans le réseau résiduel, de la deuxième caractéristique intermédiaire vers la première caractéristique d'image et la deuxième caractéristique d'image qui correspondent à l'image à détecter, et l'édition de la première caractéristique d'image et de la deuxième caractéristique d'image comprend :
la réalisation d'une convolution séparable en profondeur en se basant sur la deuxième caractéristique intermédiaire à travers le premier bloc résiduel dans le réseau résiduel pour obtenir un premier composant de caractéristique ;
la réalisation d'une cartographie identique sur la deuxième caractéristique intermédiaire pour obtenir un deuxième composant de caractéristique ;
la synthèse du premier composant de caractéristique et du deuxième composant de caractéristique pour obtenir une première caractéristique cible ;
la cartographie de la première caractéristique cible vers la première caractéristique d'image et la deuxième caractéristique d'image qui correspondent à l'image à détecter ; et
l'édition de la première caractéristique d'image et de la deuxième caractéristique d'image.

4. Procédé selon la revendication 3, dans lequel la réalisation de la convolution séparable en profondeur en se basant sur la deuxième caractéristique intermédiaire à travers le premier bloc résiduel dans le réseau résiduel pour obtenir le premier composant de caractéristique comprend :
la réalisation d'une réduction dimensionnelle, d'une convolution séparable en profondeur, et d'une augmentation dimensionnelle séquentiellement sur la deuxième caractéristique intermédiaire pour obtenir le premier composant de caractéristique.

5. Procédé selon la revendication 2, dans lequel :
une quantité de réseaux résiduels dans le réseau basique est supérieure à un, et les réseaux résiduels sont connectés séquentiellement ;
la réalisation de l'extraction de caractéristique en se basant sur la première caractéristique intermédiaire à travers le réseau résiduel dans le réseau basique pour obtenir et éditer la première caractéristique d'image et la deuxième caractéristique d'image qui correspondent à l'image à détecter comprend :
la réalisation de l'extraction de caractéristique sur la première caractéristique intermédiaire séquentiellement à travers tous les réseaux résiduels dans le réseau basique ;
l'édition de la première caractéristique d'image correspondant à l'image à détecter à travers un premier réseau résiduel cible ; et
l'édition de la deuxième caractéristique d'image correspondant à l'image à détecter à travers un deuxième réseau résiduel cible ; et
le premier réseau résiduel cible et le deuxième réseau résiduel cible étant sélectionnés parmi les réseaux résiduels dans le réseau basique.

6. Procédé selon la revendication 5, dans lequel :
une quantité de réseaux résiduels dans le réseau basique est supérieure à un, et les réseaux résiduels sont connectés séquentiellement ;
la réalisation de l'extraction de caractéristique sur la première caractéristique intermédiaire séquentiellement à travers tous les réseaux résiduels dans le réseau basique, l'édition de la première caractéristique d'image correspondant à l'image à détecter à travers le premier réseau résiduel cible, et l'édition de la deuxième caractéristique d'image correspondant à l'image à détecter à travers un deuxième réseau résiduel cible comprennent :
la réalisation de l'extraction de caractéristique sur la première caractéristique intermédiaire séquentiellement à travers le premier bloc résiduel dans tous les réseaux résiduels ;
l'édition de la première caractéristique d'image correspondant à l'image à détecter à travers un premier bloc résiduel cible dans le premier réseau résiduel cible ; et
l'édition de la deuxième caractéristique d'image correspondant à l'image à détecter à travers un deuxième bloc résiduel cible dans le deuxième réseau résiduel cible ; et
le premier bloc résiduel cible étant sélectionné parmi les premiers blocs résiduels dans le premier réseau résiduel cible, et le deuxième bloc résiduel cible étant sélectionné parmi les premiers blocs résiduels dans le deuxième réseau résiduel cible.

7. Procédé selon la revendication 1, dans lequel la réalisation de la convolution dilatée en se basant sur la deuxième caractéristique d'image à travers le réseau convolutionnel dilaté dans le réseau neuronal prédéterminé pour obtenir et éditer la troisième caractéristique d'image correspondant à l'image à détecter comprend :
la réalisation de la convolution dilatée en se basant sur la deuxième caractéristique d'image à travers un deuxième bloc résiduel dans le réseau convolutionnel dilaté pour obtenir un troisième composant de caractéristique ;
la réalisation d'une cartographie linéaire sur la deuxième caractéristique d'image pour obtenir un quatrième composant de caractéristique ;
la synthèse du troisième composant de caractéristique et du quatrième composant de caractéristique pour obtenir une deuxième caractéristique cible ; et
la cartographie de la deuxième caractéristique cible vers la troisième caractéristique d'image correspondant à l'image à détecter.

8. Procédé selon la revendication 7, dans lequel la réalisation de la convolution dilatée en se basant sur la deuxième caractéristique d'image pour obtenir le troisième composant de caractéristique comprend :
la réalisation d'une réduction dimensionnelle, d'une convolution dilatée, et d'une augmentation dimensionnelle séquentiellement sur la deuxième caractéristique intermédiaire pour obtenir le troisième composant de caractéristique.

9. Procédé selon la revendication 1, dans lequel l'obtention de l'image à détecter comprend :
l'obtention d'une image originale ;
l'obtention d'informations descriptives de terminal qui caractérisent une capacité de calcul d'un terminal ; et
l'ajustement de l'image originale en fonction d'une résolution de référence qui correspond aux informations descriptives de terminal pour obtenir l'image à détecter.

10. Procédé selon une quelconque des revendications 1 à 9, dans lequel :
l'objet cible comprend un code d'identification, et
le code d'identification comprend au moins un code parmi : un code QR, un code unidimensionnel, ou un code d'applet.

11. Support lisible par ordinateur stockant un programme informatique, dans lequel :
le programme informatique, une fois exécuté par un processeur, met en oeuvre le procédé de détection de cible selon l'une quelconque des revendications 1 à 9.

12. Dispositif informatique, comprenant :
une mémoire, et
un processeur,
la mémoire sauvegardant un programme informatique, et
le processeur, lors de l'exécution du programme informatique, mettant en oeuvre le procédé de détection de cible selon l'une quelconque des revendications 1 à 9.
